# EUROPEAN PATENT APPLICATION

(11) **EP 4 506 557 A1**
(43) Date of publication of application: **12.02.2025**
(21) Application number: 24193004.9
(22) Date of filing: 06.08.2024
(51) Int. Cl.: F02M 35/00

(54) **INSTALLATION STRUCTURE OF INTAKE AIR TEMPERATURE SENSOR**

(30) Priority: 08.08.2023 JP 2023129582
(71) Applicant: Suzuki Motor Corporation, Shizuoka 432-8611 (JP)
(72) Inventor: YAMADA, Shinichi, Shizuoka (JP); SAKANE, Atsushi, Shizuoka (JP)
(74) Representative: Haseltine Lake Kempner LLP

(57) **Abstract**

In an installation structure of an intake air temperature sensor for detecting a temperature of intake air to an engine in a straddle-type vehicle, an air cleaner case is installed behind the engine, an outlet tube is connected to a front surface of the air cleaner case, a rear suspension is installed in front of the air cleaner case, the outlet tube has a passage portion extending forward through one side with respect to the rear suspension in a vehicle width direction of the straddle-type vehicle, and the intake air temperature sensor is installed on a side surface on another side of the outlet tube in the vehicle width direction. Thereby, a protection performance and ease of assembly of the intake air temperature sensor are ensured.

## Description

### TECHNICAL FIELD

The present invention relates to an installation structure of an intake air temperature sensor.

### BACKGROUND ART

In the related art, as an intake air temperature sensor of a straddle-type vehicle, one installed on an air cleaner is known (for example, see Patent Literature 1). An outlet tube extends forward from the air cleaner described in Patent Literature 1, and a cylinder head is connected to the outlet tube via a throttle body and an intake pipe. An air cleaner case of the air cleaner is provided below the outlet tube, and an intake air temperature sensor is installed on a lower front surface of the air cleaner case. When air is taken into the air cleaner case, a temperature of the intake air is detected by the intake air temperature sensor.

### CITATION LIST

### PATENT LITERATURE

Patent Literature 1: JP6006977B

### SUMMARY OF INVENTION

According to an aspect of the present disclosure, there is provided an installation structure of an intake air temperature sensor for detecting a temperature of intake air to an engine in a straddle-type vehicle, in which
an air cleaner case is installed behind the engine,
an outlet tube is connected to a front surface of the air cleaner case,
a rear suspension is installed in front of the air cleaner case,
the outlet tube has a passage portion extending forward through one side with respect to the rear suspension in a vehicle width direction of the straddle-type vehicle, and
the intake air temperature sensor is installed on a side surface on another side of the outlet tube in the vehicle width direction.

### BRIEF DESCRIPTION OF DRAWINGS

FIG. 1 is a right side view of a straddle-type vehicle according to the present embodiment.
FIG. 2 is a right side view of a vehicle body central portion according to the present embodiment.
FIG. 3 is a left side view of the vehicle body central portion according to the present embodiment.
FIG. 4 is a front view of an air cleaner according to the present embodiment.
FIG. 5 is a top view of the vehicle body central portion according to the present embodiment.

### DESCRIPTION OF EMBODIMENTS

In a case where the intake air temperature sensor is installed in a lower portion of the air cleaner having a relatively large space as in Patent Literature 1, water droplets and mud are likely to adhere to the intake air temperature sensor, a protection performance deteriorates, and ease of assembly deteriorates. Further, in recent years, the straddle-type vehicle is required to add other components such as electronic equipment in order to improve drivability or the like, and it is difficult to ensure an installation space of the other components depending on an installation layout of the intake air temperature sensor.

Aspect of non-limiting embodiments of the present disclosure relates to provide an installation structure of an intake air temperature sensor capable of ensuring a protection performance and ease of assembly of the intake air temperature sensor.

An intake air temperature sensor according to one aspect of the present disclosure detects a temperature of intake air to an engine. An air cleaner case is installed behind the engine. An outlet tube is connected to a front surface of the air cleaner case. A rear suspension is installed in front of the air cleaner case. The outlet tube has a passage portion extending forward through one side with respect to the rear suspension in a vehicle width direction. The intake air temperature sensor is installed on a side surface of the outlet tube on the other side in the vehicle width direction. Than the passage portion of the outlet tube passing through the one side with respect to the rear suspension in the vehicle width direction, the side surface on the other side of the outlet tube in the vehicle width direction is positioned on the inner side in the vehicle width direction. The intake air temperature sensor installed on the side surface on the other side of the outlet tube in the vehicle width direction is less likely to protrude outward in the vehicle width direction, so that water droplets and mud are less likely to adhere thereto. In addition, since the intake air temperature sensor is oriented laterally, ease of assembly is ensured. Further, the intake air temperature sensor can be installed using a narrow space on the other side of the outlet tube in the vehicle width direction, and a space on an upper side or a lower side of the outlet tube can be used for installing other components.

### Embodiment

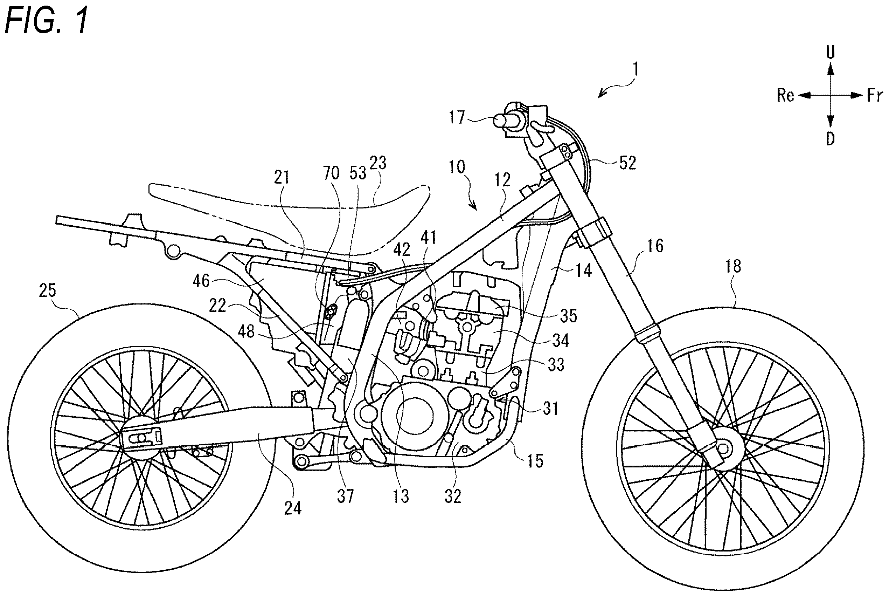

Hereinafter, a straddle-type vehicle according to the present embodiment will be described with reference to the accompanying drawings. FIG. 1 is a right side view of the straddle-type vehicle according to the present embodiment. In the following drawings, an arrow Fr indicates a vehicle front side, an arrow Re indicates a vehicle rear side, an arrow L indicates a vehicle left side, an arrow R indicates a vehicle right side, an arrow U indicates a vehicle upper side, and an arrow D indicates a vehicle lower side.

As shown in FIG. 1, a straddle-type vehicle 1 is configured by mounting various components such as an engine 31 and an electrical system on a vehicle body frame 10. A pair of main frames 12 extend diagonally rearward and downward from a head pipe of the vehicle body frame 10. Rear portions of the pair of main frames 12 form a pair of body frames 13 bent downward. A down frame 14 extends downward from the head pipe. A pair of under frames 15 bent rearward are connected to a lower portion of the down frame 14. Rear end portions of the pair of under frames 15 are connected to lower portions of the pair of body frames 13, and the vehicle body frame 10 has a cradle shape.

A front fork 16 is supported by the head pipe via a steering shaft so as to be able to be steered (not shown). A handlebar 17 is provided on an upper portion of the front fork 16. A front wheel 18 is supported on a lower portion of the front fork 16 so as to be able to rotate. A pair of upper seat rails (seat rails) 21 extend rearward from upper portions of the pair of body frames 13. A pair of lower seat rails 22 extend diagonally rearward from lower portions of the pair of body frames 13. Rear portions of the pair of lower seat rails 22 are fixed to rear portions of the pair of upper seat rails 21. A seat 23 is supported by the pair of upper seat rails 21 from below. The pair of upper seat rails 21 are supported by the pair of lower seat rails 22 from below.

A swing arm 24 is supported by the body frames 13 so as to be able to swing. The swing arm 24 extends rearward from the body frames 13. A rear wheel 25 is supported at a rear end of the swing arm 24 so as to be able to rotate. A rear suspension 37 is installed near a front end of the swing arm 24. The swing arm 24, the rear suspension 37, and the body frame 13 are connected via a link mechanism. Since the rear suspension 37 extends and contracts in accordance with swinging of the swing arm 24, unevenness of a road surface is absorbed and vibration is prevented, and a ground contact property between the road surface and the rear wheel 25 is enhanced.

The engine 31 is a four-stroke single-cylinder engine. The engine 31 is suspended inside the vehicle body frame 10 via a plurality of suspension brackets. A cylinder assembly in which a cylinder 33, a cylinder head 34, and a cylinder head cover 35 are stacked is attached to an upper portion of a crankcase 32 of the engine 31. Intake system components such as an intake pipe 41, a throttle body 42, and an air cleaner 46 are connected to a rear side of the engine 31 (the cylinder head 34). The throttle body 42 is installed below the main frames 12. The air cleaner 46 is installed below the upper seat rails 21.

An intake air temperature sensor 70 that detects a temperature of intake air to the engine 31 is installed in the straddle-type vehicle 1. When the intake air temperature sensor 70 is installed in an installation space of the air cleaner 46 or a fuel tank (not shown), it is necessary to reduce a capacity of the air cleaner 46 or the fuel tank or increase a size of the vehicle. Further, although there is a relatively large space below the air cleaner 46, when the intake air temperature sensor 70 is installed in a space below the air cleaner 46, water droplets, mud, and the like splashed up by vehicle wheels and the like adhere to the intake air temperature sensor 70, and a protection performance of the intake air temperature sensor 70 deteriorates, and ease of assembly also deteriorates.

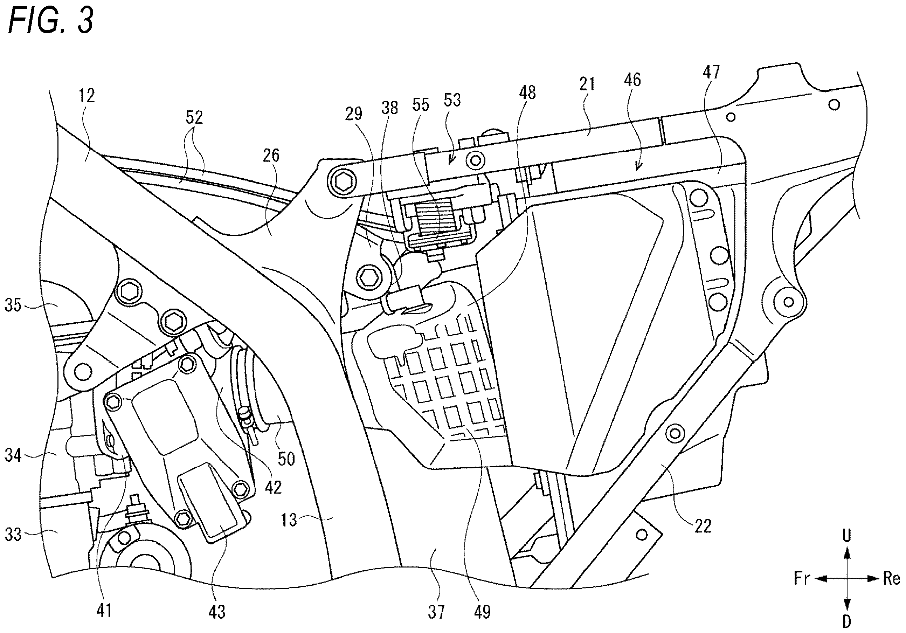

In the straddle-type vehicle 1, electronic equipment is required to be added in order to comply with recent exhaust gas regulations and improve drivability. For example, an electronically controlled throttle body 42 is employed in the straddle-type vehicle 1, and it is necessary to ensure an installation space for an accelerator position sensor 53. It is desirable that an upper portion of the outlet tube 48 of the air cleaner 46 is ensured for installation of other components such as the accelerator position sensor 53. In the present embodiment, the intake air temperature sensor 70 is installed on a right side surface of the outlet tube 48 opposite to a passage portion 50 (see FIG. 3) of the outlet tube 48 bypassing the rear suspension 37.

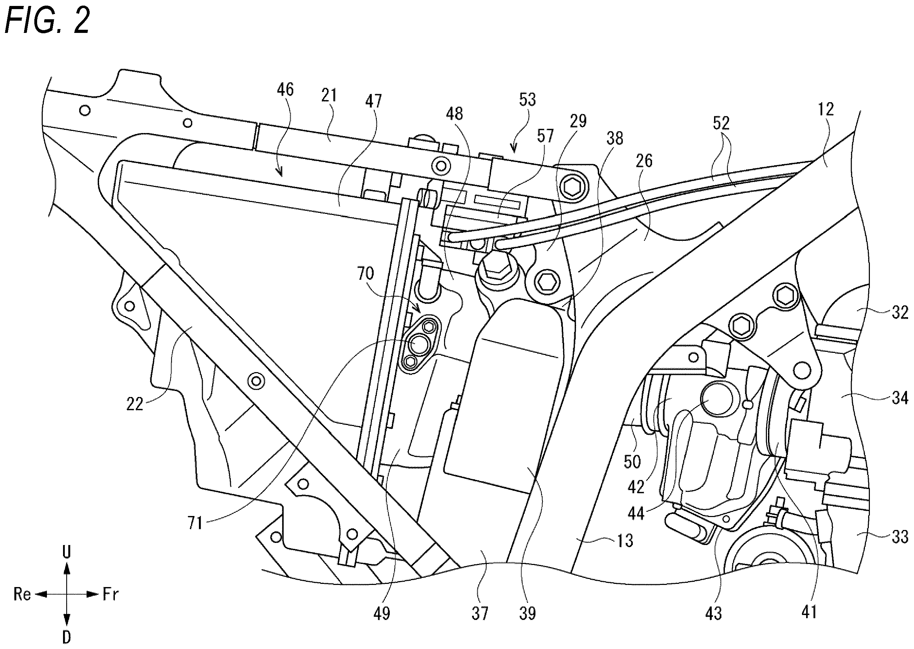

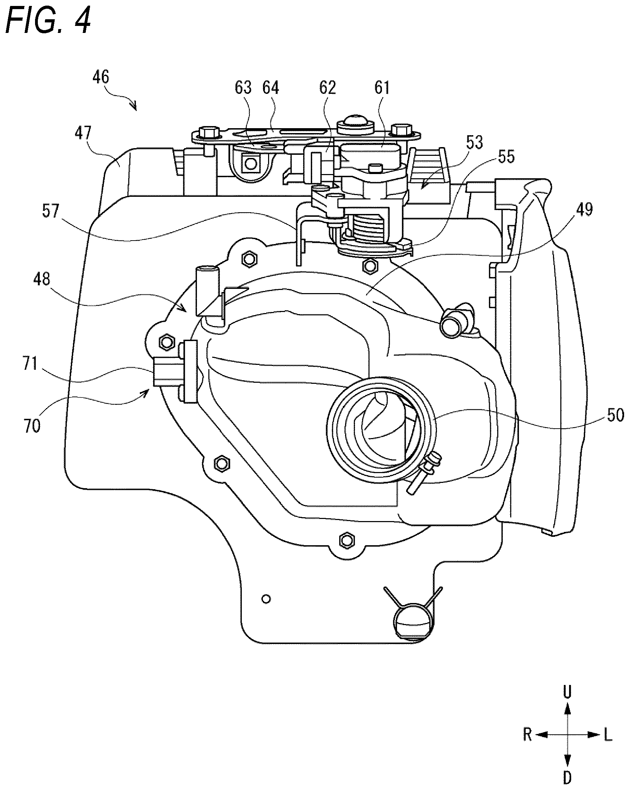

An installation structure of an intake air temperature sensor will be described with reference to FIGS. 2 to 4. FIG. 2 is a right side view showing a vehicle body central portion according to the present embodiment. FIG. 3 is a left side view of the vehicle body central portion according to the present embodiment. FIG. 4 is a front view of the air cleaner according to the present embodiment.

As shown in FIGS. 2 and 3, the air cleaner 46 is installed in a triangular space in a side view surrounded by the body frame 13, the upper seat rail 21, and the lower seat rail 22 in the vehicle body central portion. A dirty side of the air cleaner 46 is formed by an air cleaner case 47. A clean side of the air cleaner 46 is formed by the outlet tube 48. The air cleaner case 47 has a box shape having a triangular shape in a side view. The air cleaner case 47 is installed below the pair of upper seat rails 21 behind the engine 31. The air cleaner case 47 is provided with a filter. Air taken into the air cleaner case 47 is filtered by the filter.

The outlet tube 48 is connected to a front surface of the air cleaner case 47. The outlet tube 48 extends forward from the air cleaner case 47. The outlet tube 48 is connected to a rear surface of the cylinder head 34 via the throttle body 42 and the intake pipe 41. An intake passage is formed by the outlet tube 48, the throttle body 42, and the intake pipe 41. After air is sent from the outlet tube 48 to the throttle body 42, an intake air amount is adjusted by the throttle body 42. And then air is supplied from the throttle body 42 to the cylinder head 34 through the intake pipe 41.

A throttle valve (not shown) is provided in the intake passage of the throttle body 42. An actuator 43 is provided on a lateral side of the throttle body 42. The actuator 43 is provided with a reduction gear train for transmitting a motor driving force to a valve shaft 44 of the throttle valve and an electronic board for motor control. The electronic board is accommodated inside a rectangular side surface cover of the actuator 43. The side surface cover is attached to the throttle body 42 so as to face a vehicle outer side. The motor driving force is transmitted to the valve shaft 44 by the actuator 43, and the throttle valve in the intake passage is opened and closed to adjust the intake air amount.

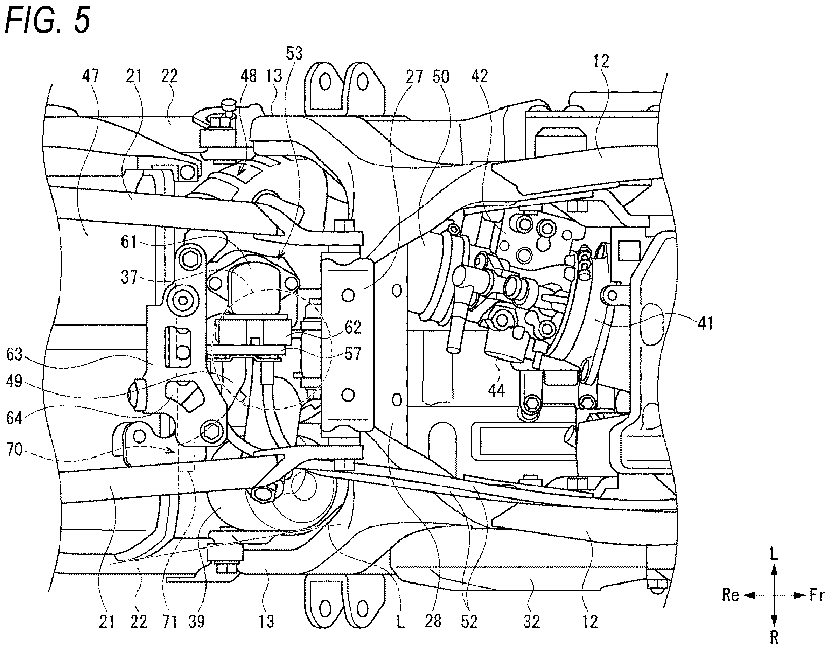

Upper portions of the pair of body frames 13 include protruding portions 26 which protrude diagonally rearward and upward. These protruding portions 26 are connected via frame bridges 27 and 28 (see FIG. 5). A bracket 29 is provided at a center portion in a vehicle width direction of the frame bridge 28 on a lower side. An upper end portion 38 of the rear suspension 37 is fixed to the bracket 29. The rear suspension 37 is installed in front of the air cleaner case 47. The passage portion 50 of the outlet tube 48 extends forward from the air cleaner case 47 through a left side (one side in the vehicle width direction) with respect to the rear suspension 37. A reservoir tank 39 is provided on a right side (the other side in the vehicle width direction) with respect to the rear suspension 37.

An upper surface of the outlet tube 48 is lower than an upper surface of the air cleaner case 47. The accelerator position sensor 53 is installed in a space above the outlet tube 48. The accelerator position sensor 53 is installed above the outlet tube 48 between the pair of upper seat rails 21. The pair of upper seat rails 21 and the outlet tube 48 cover the accelerator position sensor 53 from the lateral side and the lower side, thereby protecting the accelerator position sensor 53 from water droplets, mud, an impact, and the like. The accelerator cable 52 is connected to the accelerator position sensor 53.

The intake air temperature sensor 70 is installed on the right side surface (a side surface on the other side in the vehicle width direction) of the outlet tube 48. An intake air temperature in the outlet tube 48 is detected by the intake air temperature sensor 70. The intake air temperature sensor 70 is positioned between a front surface of the air cleaner case 47 and the reservoir tank 39 in a side view. The outlet tube 48 is curved so as to pass through the left side with respect to the rear suspension 37. The right side surface of the outlet tube 48 is positioned on an inner side in the vehicle width direction compared to a left side surface of the outlet tub 48. Thereby the intake air temperature sensor 70 is less likely to protrude to the vehicle outer side and is protected from water droplets, mud, an impact, and the like.

As shown in FIG. 4, the air cleaner 46 is formed by connecting the outlet tube 48 to the front surface of the air cleaner case 47. The outlet tube 48 extends from upstream (rear) to downstream (front) so as to narrow the intake passage. An upstream side of the outlet tube 48 is a chamber portion 49 connected to the air cleaner case 47. A downstream side of the outlet tube 48 is the passage portion 50 connected to the throttle body 42. The chamber portion 49 is curved leftward toward the front so as to avoid the rear suspension 37 and the reservoir tank 39 (see FIG. 2). The tubular passage portion 50 extends forward from a front end of the chamber portion 49.

As described above, the chamber portion 49 is curved leftward, and a right side surface on a base end side of the chamber portion 49 is recessed inward in the vehicle width direction from a right side surface of the air cleaner case 47. Using a space formed by a step between the chamber portion 49 and the air cleaner case 47, the intake air temperature sensor 70 is installed on the right side surface of the base end side of the chamber portion 49. An axial direction of the intake air temperature sensor 70 is oriented in the vehicle width direction. A detection end of the intake air temperature sensor 70 enters the chamber portion 49. A connector 71 of the intake air temperature sensor 70 protrudes outward from the chamber portion 49. The connector 71 is positioned on the inner side in the vehicle width direction than the right side surface of the air cleaner case 47.

The intake air temperature sensor 70 is positioned at the same height as the passage portion 50. Since the connector 71 of the intake air temperature sensor 70 is positioned high in a state of being oriented in a horizontal direction, water droplets and mud splashed up by the rear wheel 25 (see FIG. 1) are less likely to adhere to the intake air temperature sensor 70. Since the connector 71 of the intake air temperature sensor 70 is oriented in the vehicle width direction, water is less likely to enter the sensor through the connector 71. An axial direction of the intake air temperature sensor 70 may be inclined so as to intersect the vehicle width direction, instead of being oriented in the vehicle width direction. In addition, the intake air temperature sensor 70 and the passage portion 50 do not need to be completely the same height, and the intake air temperature sensor 70 and the passage portion 50 may be substantially the same height.

Since the intake air temperature sensor 70 is installed on the right side surface of the outlet tube 48, an installation space for the accelerator position sensor 53 is ensured above the outlet tube 48. The accelerator position sensor 53 is provided with a pulley 55 around which an accelerator cable 52 (see FIG. 2) is wound, and a sensor unit 61 that detects an operation amount of an accelerator grip 51 from a rotation amount of the pulley 55. The accelerator position sensor 53 is supported by the pair of upper seat rails 21 (see FIG. 5) via the seat bracket 63 and the sensor bracket 64 in a state where a shaft of the pulley 55 is oriented in the upper-lower direction.

Layout of the intake air temperature sensor will be described in detail with reference to FIGS. 2 and 5. FIG. 5 is a top view of the vehicle body central portion according to the present embodiment.

As shown in FIGS. 2 and 5, a step is formed between the right side surface of the air cleaner case 47 and the right side surface of the outlet tube 48, and the intake air temperature sensor 70 is installed on the right side surface of the chamber portion 49 of the outlet tube 48 using the step. The intake air temperature sensor 70 is positioned between the air cleaner case 47 and the rear suspension 37 in a side view of the straddle-type vehicle. Since the intake air temperature sensor 70 is exposed from the right side (the other side in the vehicle width direction) between the air cleaner case 47 and the rear suspension 37, and the connector 71 of the intake air temperature sensor 70 is oriented to the right side, the ease of assembly of the intake air temperature sensor 70 from the right side is improved.

The intake air temperature sensor 70 is positioned between the air cleaner case 47 and the reservoir tank 39 in a top view of the straddle-type vehicle. The connector 71 on a distal end side of the intake air temperature sensor 70 is positioned inside a right side surface of the air cleaner case 47 and a right side surface of the reservoir tank 39. More specifically, the connector 71 of the air intake air temperature sensor 70 is positioned on the inner side in the vehicle width direction than a straight line L connecting a right end of the air cleaner case 47 and a right end of the reservoir tank 39. The connector 71 of the intake air temperature sensor 70 is prevented from coming into contact with the ground when the vehicle falls down, and the intake air temperature sensor 70 is protected by the air cleaner case 47 and the reservoir tank 39 from an impact when the vehicle falls down .

In the top view, the rear suspension 37 is positioned at a center in the vehicle width direction, the passage portion 50 of the outlet tube 48 is positioned on the left side of the rear suspension 37, and the intake air temperature sensor 70 is positioned on the right side of the rear suspension 37. Spaces on both sides of the rear suspension 37 are used for installing the passage portion 50 and the intake air temperature sensor 70. Since the outlet tube 48 avoids the rear suspension 37 on the left side, the outlet tube 48 does not interfere with the reservoir tank 39. The reservoir tank 39 is positioned in front of the intake air temperature sensor 70 and protects the intake air temperature sensor 70 from water droplets and mud splashed up by the front wheel 18.

In the vehicle body central portion, the pair of upper seat rails 21 extend rearward from the upper portions of the pair of body frames 13. The pair of lower seat rails 22 extend rearward from the lower portions of the pair of body frames 13. The pair of upper seat rails 21 are positioned on the inner side in the vehicle width direction than the pair of lower seat rails 22. In the top view, the intake air temperature sensor 70 is covered with one of the upper seat rails 21 from above, and is positioned on an inner side in the vehicle width direction than the lower seat rail 22. Although the intake air temperature sensor 70 is installed on the right side surface of the outlet tube 48, the intake air temperature sensor 70 is protected by the upper seat rail 21 and the lower seat rail 22 from an impact when the vehicle falls down.

The accelerator position sensor 53 is supported by the pair of upper seat rails 21 via the seat bracket 63 and the sensor bracket 64. A coupler 62 is provided in the sensor unit 61 of the accelerator position sensor 53. The cable guide 57 is provided in front of the pulley 55 of the accelerator position sensor 53. An insertion port of the coupler 62 and a guide hole of the cable guide 57 face the right side as same as an insertion port of the connector 71 of the intake air temperature sensor 70. An electric cable (not shown) for the accelerator position sensor 53, the accelerator cable 52, and an electric cable (not shown) for the intake air temperature sensor 70 are laid so as not to interfere with the intake system components.

As described above, according to the installation structure of the intake air temperature sensor 70 of the present embodiment, the right side surface of the outlet tube 48 is positioned on the inner side in the vehicle width direction than the passage portion 50 of the outlet tube 48 passing through the left side with respect to the rear suspension 37. The intake air temperature sensor 70 installed on the right side surface of the outlet tube 48 is less likely to protrude outward in the vehicle width direction, so that water droplets and mud are less likely to adhere thereto. In addition, since the intake air temperature sensor 70 is oriented laterally, the ease of assembly is ensured. Further, the intake air temperature sensor 70 can be installed using a narrow space on the right side of the outlet tube 48, and a space on the upper side or the lower side of the outlet tube 48 can be used for installing the accelerator position sensor 53.

In the present embodiment, the passage portion of the outlet tube extends forward through the left side with respect to the rear suspension, but the passage portion of the outlet tube may extend forward through the right side with respect to the rear suspension. Although the intake air temperature sensor is installed on the right side surface of the outlet tube, the intake air temperature sensor may be installed on the left side surface of the outlet tube.

In the present embodiment, the intake air temperature sensor is installed in the chamber portion of the outlet tube, but the intake air temperature sensor may be installed in the passage portion of the outlet tube.

In the present embodiment, the seat rail of the straddle-type vehicle includes the pair of upper seat rails and the pair of lower seat rails, but the seat rail may include the pair of upper seat rails.

In the present embodiment, the accelerator position sensor is installed above the outlet tube, but other components other than the accelerator position sensor may be installed at least one of above and below the outlet tube.

The installation structure of an intake air temperature sensor according to the present embodiment is not limited to the off road type straddle-type vehicle described above, and may be adopted in other types of straddle-type vehicles. The straddle-type vehicle is not limited to a general vehicle in which a driver rides on a seat in a posture straddling the seat, and includes a scooter-type vehicle in which the driver rides on the seat without straddling the seat.

As described above, according to a first aspect, there is provided an installation structure of an intake air temperature sensor (70) for detecting a temperature of intake air to an engine (31) in a straddle-type vehicle, in which an air cleaner case (47) is installed behind the engine, an outlet tube (48) is connected to a front surface of the air cleaner case, a rear suspension (37) is installed in front of the air cleaner case, the outlet tube has a passage portion (50) extending forward through one side with respect to the rear suspension in a vehicle width direction of the straddle-type vehicle, and the intake air temperature sensor is installed on a side surface on another side of the outlet tube in the vehicle width direction. According to this configuration, the side surface on the other side of the outlet tube in the vehicle width direction is positioned on an inner side in the vehicle width direction than the passage portion of the outlet tube passing through the one side with respect to the rear suspension in the vehicle width direction. The intake air temperature sensor installed on the side surface on the other side of the outlet tube in the vehicle width direction is less likely to protrude outward in the vehicle width direction, so that water droplets and mud are less likely to adhere thereto. In addition, since the intake air temperature sensor is oriented laterally, ease of assembly is ensured. Further, the intake air temperature sensor can be installed using a narrow space on the other side of the outlet tube in the vehicle width direction, and a space on an upper side or a lower side of the outlet tube can be used for installing other components.

According to a second aspect, in the first aspect, the intake air temperature sensor is positioned between the air cleaner case and the rear suspension in a side view. According to this configuration, the intake air temperature sensor can be installed using a narrow space between the air cleaner case and the rear suspension.

According to a third aspect, in the first and the second aspect, a reservoir tank (39) is provided on the other side with respect to the rear suspension in the vehicle width direction, the intake air temperature sensor is positioned between the air cleaner case and the reservoir tank in a top view, and a connector (71) on a distal end side of the intake air temperature sensor is positioned inside a side surface on the other side of the air cleaner case and a side surface on the other side of the reservoir tank in the vehicle width direction. According to this configuration, the intake air temperature sensor can be installed using a narrow space between the air cleaner case and the reservoir tank, and the intake air temperature sensor is protected from an impact by the air cleaner case and the reservoir tank when the vehicle falls down.

According to a fourth aspect, in any one of the first to third aspects, the rear suspension is positioned at a center in the vehicle width direction in a top view, the passage portion is positioned on the one side with respect to the rear suspension in the vehicle width direction, and the intake air temperature sensor is positioned on the other side with respect to the rear suspension in the vehicle width direction. According to this configuration, spaces on both sides of the rear suspension are used for installing the passage portion and the intake air temperature sensor.

According to a fifth aspect, in any one of the first to fourth aspects, the intake air temperature sensor is installed at the same height as the passage portion. According to this configuration, since the intake air temperature sensor is positioned high, water droplets and mud splashed up from a vehicle wheel are less likely to adhere to the intake air temperature sensor.

According to a sixth aspect, in any one of the first to fifth aspects, a seat (23) is supported from below by a pair of upper seat rails (21), the pair of upper seat rails are supported from below by a pair of lower seat rails (22), the pair of upper seat rails are positioned on an inner side in the vehicle width direction than the pair of lower seat rails, and the intake air temperature sensor is covered from above by the upper seat rails and positioned on the inner side in the vehicle width direction than the lower seat rails, in a top view. According to this configuration, even when the intake air temperature sensor is installed on the side surface of the outlet tube, the intake air temperature sensor is protected from an impact by the upper seat rails and the lower seat rails when the vehicle falls down.

According to a seventh aspect, there is provided a straddle-type vehicle, including an air cleaner case installed behind an engine, an outlet tube connected to a front surface of the air cleaner case, a rear suspension installed in front of the air cleaner case, and an intake air temperature sensor configured to detect a temperature of intake air to the engine, in which the outlet tube has a passage portion extending forward through one side with respect to the rear suspension in a vehicle width direction of the straddle-type vehicle, and the intake air temperature sensor is installed on a side surface on another side of the outlet tube in the vehicle width direction. According to this configuration, the side surface on the other side of the outlet tube in the vehicle width direction is positioned on an inner side in the vehicle width direction than the passage portion of the outlet tube passing through the one side with respect to the rear suspension in the vehicle width direction. The intake air temperature sensor installed on the side surface on the other side of the outlet tube in the vehicle width direction is less likely to protrude outward in the vehicle width direction, so that water droplets and mud are less likely to adhere thereto. In addition, since the intake air temperature sensor is oriented laterally, ease of assembly is ensured. Further, the intake air temperature sensor can be installed using a narrow space on the other side of the outlet tube in the vehicle width direction, and a space on an upper side or a lower side of the outlet tube can be used for installing other components

Although the present embodiment is described, a part or all of the embodiment and modifications described above may be combined as another embodiment.

The technique according to the present invention is not limited to the embodiment described above, and may be variously changed, replaced, or modified without departing from the gist of the technical concept. Further, if the technical idea can be realized in another way by the progress of technology or another derived technology, the method may be used. Therefore, the claims cover all embodiments that may fall within the scope of the technical concept.

## Claims

1. An installation structure of an intake air temperature sensor for detecting a temperature of intake air to an engine in a straddle-type vehicle, wherein
an air cleaner case is installed behind the engine,
an outlet tube is connected to a front surface of the air cleaner case,
a rear suspension is installed in front of the air cleaner case,
the outlet tube has a passage portion extending forward through one side with respect to the rear suspension in a vehicle width direction of the straddle-type vehicle, and
the intake air temperature sensor is installed on a side surface on another side of the outlet tube in the vehicle width direction.

2. The installation structure of an intake air temperature sensor according to claim 1, wherein
the intake air temperature sensor is positioned between the air cleaner case and the rear suspension in a side view of the straddle-type vehicle.

3. The installation structure of an intake air temperature sensor according to claim 1 or 2, wherein
a reservoir tank is provided on the other side with respect to the rear suspension in the vehicle width direction, and
the intake air temperature sensor is positioned between the air cleaner case and the reservoir tank in a top view of the straddle-type vehicle, and a connector on a distal end side of the intake air temperature sensor is positioned inside a side surface on the other side of the air cleaner case and a side surface on the other side of the reservoir tank in the vehicle width direction.

4. The installation structure of an intake air temperature sensor according to claim 1 or 2, wherein
the rear suspension is positioned at a center in the vehicle width direction in a top view of the straddle-type vehicle, the passage portion is positioned on the one side with respect to the rear suspension in the vehicle width direction, and the intake air temperature sensor is positioned on the other side with respect to the rear suspension in the vehicle width direction.

5. The installation structure of an intake air temperature sensor according to claim 1 or 2, wherein
the intake air temperature sensor is installed at the same height as the passage portion.

6. The installation structure of an intake air temperature sensor according to claim 1 or 2, wherein
a seat is supported from below by a pair of upper seat rails,
the pair of upper seat rails are supported from below by a pair of lower seat rails, and the pair of upper seat rails are positioned on an inner side in the vehicle width direction than the pair of lower seat rails, and the intake air temperature sensor is covered from above by the upper seat rails and positioned on the inner side in the vehicle width direction than the lower seat rails, in a top view of the straddle-type vehicle.

7. A straddle-type vehicle, comprising:
an air cleaner case installed behind an engine;
an outlet tube connected to a front surface of the air cleaner case;
a rear suspension installed in front of the air cleaner case; and
an intake air temperature sensor configured to detect a temperature of intake air to the engine, wherein
the outlet tube has a passage portion extending forward through one side with respect to the rear suspension in a vehicle width direction of the straddle-type vehicle, and
the intake air temperature sensor is installed on a side surface on another side of the outlet tube in the vehicle width direction.

8. The straddle-type vehicle according to claim 7, wherein
the intake air temperature sensor is positioned between the air cleaner case and the rear suspension in a side view of the straddle-type vehicle.

9. The straddle-type vehicle according to claim 7 or 8, wherein
a reservoir tank is provided on the other side with respect to the rear suspension in the vehicle width direction, and
the intake air temperature sensor is positioned between the air cleaner case and the reservoir tank in a top view of the straddle-type vehicle, and a connector on a distal end side of the intake air temperature sensor is positioned inside a side surface on the other side of the air cleaner case and a side surface on the other side of the reservoir tank in the vehicle width direction.

10. The straddle-type vehicle according to claim 7 or 8, wherein
the rear suspension is positioned at a center in the vehicle width direction in a top view of the straddle-type vehicle, the passage portion is positioned on the one side with respect to the rear suspension in the vehicle width direction, and the intake air temperature sensor is positioned on the other side with respect to the rear suspension in the vehicle width direction.

11. The straddle-type vehicle according to claim 7 or 8, wherein
the intake air temperature sensor is installed at the same height as the passage portion.

12. The straddle-type vehicle according to claim 7 or 8, wherein
a seat is supported from below by a pair of upper seat rails,
the pair of upper seat rails are supported from below by a pair of lower seat rails, and
the pair of upper seat rails are positioned on an inner side in the vehicle width direction than the pair of lower seat rails, and the intake air temperature sensor is covered from above by the upper seat rails and positioned on the inner side in the vehicle width direction than the lower seat rails, in a top view of the straddle-type vehicle.
